# EUROPEAN PATENT APPLICATION

(11) **EP 4 811 354 A1**
(43) Date of publication of application: **23.09.2026**
(21) Application number: 25884293.9
(22) Date of filing: 13.08.2025
(51) Int. Cl.: G10L 15/26

(54) **SEMANTIC DATA PROCESSING METHOD AND APPARATUS, AND MIDDLEWARE, STORAGE MEDIUM, AND PRODUCT**

(30) Priority: 28.10.2024 CN 202411509098
(71) Applicant: Chery Automobile Co., Ltd., Wuhu, Anhui 241006 (CN); Wuhu Lion Automotive Technologies Co., Ltd., Wuhu, Anhui 241006 (CN); Lion Automotive Technologies Nanjing Co., Ltd., Nanjing, Jiangsu 210046 (CN)
(72) Inventor: SUN, Chao, Wuhu, Anhui 241006 (CN)
(74) Representative: Adamson Jones
(86) International application number: PCT/CN2025/114389
(87) International publication number: WO 2026/091773

(57) **Abstract**

A semantic data processing method and apparatus, and middleware, a storage medium, and a product. The method comprises: receiving semantic data issued by a sender (S101); parsing the semantic data on the basis of a semantic protocol of the sender, identifying target application software corresponding to the parsed semantic data, and converting the parsed semantic data to generate a control instruction executable by the target application software (S102); and sending the control instruction to the target application software, wherein the target application software executes a target operation on the basis of the control instruction (S103).

## Description

The present disclosure claims priority to Chinese Patent Application No. 202411509098.3, filed October 28, 2024, and entitled "METHOD AND APPARATUS FOR PROCESSING SEMANTIC DATA, MIDDLEWARE, STORAGE MEDIUM, AND PRODUCT", the entire contents of which are incorporated herein by reference.

### TECHNICAL FIELD

The present disclosure relates to the field of vehicle technologies, and in particular, to a method and an apparatus for processing semantic data, middleware, a storage medium, and a product.

### BACKGROUND

With the rapid development of hardware and software technologies in the field of intelligent vehicle cockpits, modern intelligent vehicles can support increasingly complex human-computer interaction scenarios. As a key technology, voice control has covered the full control scope of intelligent cockpits. However, different hardware devices for perception and software products for control in the intelligent cockpit are purchased from different suppliers, with different implementation technologies. The semantic data generated from speech content also complies with respective semantic protocols without unified standards.

Therefore, whenever a voice control function needs to be added or improved, it is necessary to coordinate technicians of relevant suppliers for technical protocol docking and conduct customized development for different semantic protocols. This not only increases the initial product development costs, but also requires a large amount of human and material resources in the later maintenance stage to ensure normal operation.

### SUMMARY

The present disclosure provides a method and an apparatus for processing semantic data, middleware, a storage medium, and a product, to solve the problems that semantic data generated by different perception-end hardware devices and control-end software products comply with respective semantic protocols, requiring a large amount of technical protocol docking during voice development, which results in high development costs and low efficiency.

In an embodiment of the present disclosure, a method for processing semantic data is provided. The method is applied to middleware that is a background service process, and includes: receiving semantic data sent by a sender; parsing the semantic data according to a semantic protocol of the sender, identifying target application software corresponding to the parsed semantic data, and converting the parsed semantic data to generate a control instruction executable by the target application software; and sending the control instructions to the target application software, wherein the target application software performs a target operation according to the control instruction.

Optionally, converting the parsed semantic data to generate the control instruction executable by the target application software includes: acquiring a target communication protocol; and converting the parsed semantic data based on the target communication protocol to generate the control instruction executable by the target application software.

Optionally, before sending the control instruction to the target application software, the method further includes: encapsulating the control instruction into target format data by using a communication protocol of the target application software.

Optionally, before converting the parsed semantic data to generate the control instruction executable by the target application software, the method further includes: reading all application software installed on a vehicle; and, in response to the target application software not existing in the all application software, then intercepting the parsed semantic data and generating an interception prompt.

Optionally, the target application software is a foreground service process.

In another embodiment of the present disclosure, an apparatus for processing semantic data is provided. The apparatus is applied to middleware that is a background service process, and includes: a receiving module, configured to receive semantic data sent by a sender; a processing module, configured to parse the semantic data according to a semantic protocol of the sender, identify target application software corresponding to the parsed semantic data, and convert the parsed semantic data to generate a control instruction executable by the target application software; and a sending module, configured to send the control instruction to the target application software, wherein the target application software performs a target operation according to the control instructions.

Optionally, the processing module is further configured to: acquire a target communication protocol; and convert the parsed semantic data based on the target communication protocol to generate the control instruction executable by the application software.

Optionally, the apparatus for processing semantic data further includes: an encapsulating module configured to encapsulate the control instruction into target format data by using a communication protocol of the target application software before sending the control instruction to the target application software.

Optionally, the apparatus for processing semantic data further includes: a reading module, configured to read all application software installed on a vehicle before converting the parsed semantic data to generate the control instruction executable by the target application software; and an intercepting module, configured to intercept, in response to the target application software not existing in the all application software, the parsed semantic data and generate an interception prompt.

Optionally, the target application software is a foreground service process.

In another embodiment of the present disclosure, middleware is provided. The middleware includes a memory, a processor, and a computer program stored on the memory and executable on the processor, wherein the processor executes the program to perform the method for processing semantic data as described in the aforementioned embodiments.

In another embodiment of the present disclosure, a computer-readable storage medium is provided. The computer-readable storage medium storing a computer program or an instruction thereon, wherein the computer program or the instruction, when executed, performs the method for processing semantic data as described in the aforementioned embodiments.

In another embodiment of the present disclosure, a computer program product is provided. The computer program product includes a computer program or an instruction, wherein the computer program or the instruction, when executed, performs the method for processing semantic data according to the above-mentioned embodiments.

Therefore, the present disclosure has at least the following beneficial effects:
In the embodiments of the present disclosure, semantic data sent by a sender is received, and various heterogeneous semantic data is converted into unified control instructions executable by application software. There is no need to separately perform protocol docking for each different speech recognition service or third-party application software, which greatly simplifies the development and integration process. This not only improves the reusability of product functions, but also significantly reduces the development cost of enterprise intelligent cockpit products.

Additional aspects and advantages of the present disclosure will be partially given in the following description, and partially will become apparent from the following description, or may be learned through practice of the present disclosure.

### BRIEF DESCRIPTION OF DRAWINGS

For clearer descriptions of the technical solutions in the embodiments of the present disclosure, the following briefly describes the accompanying drawings required for describing the embodiments. Apparently, the accompanying drawings in the following description illustrate merely some embodiments of the present disclosure, and those of ordinary skill in the art can still derive other drawings from these accompanying drawings without creative efforts.
FIG. 1 is a flowchart of a method for processing semantic data according to some embodiments of the present disclosure;
FIG. 2 is a diagram of a communication relationship between middleware, a speech recognition service, and an operating system according to some embodiments of the present disclosure;
FIG. 3 is an exemplary diagram of a method for processing semantic data according to some embodiments of the present disclosure;
FIG. 4 is a block diagram of an apparatus for processing semantic data according to some embodiments of the present disclosure; and
FIG. 5 is a schematic structural diagram of a vehicle-mounted computer according to some embodiments of the present disclosure.

### DETAILED DESCRIPTION

The embodiments of the present disclosure are described in detail below, and examples of the embodiments are shown in the accompanying drawings, wherein the same or similar reference numerals throughout indicate the same or similar elements or elements having the same or similar functions. The embodiments described below with reference to the accompanying drawings are exemplary and are intended to explain the present disclosure, and should not be construed as limiting the present disclosure.

The following describes the method and apparatus for processing semantic data, the middleware, and the storage medium in the embodiments of the present disclosure with reference to the accompanying drawings. Addressing the problems mentioned in the background technology, the present disclosure provides a method for processing semantic data. In this method, the semantic data sent by a sender is received, and various heterogeneous semantic data are converted into unified control instructions executable by application software. There is no need to perform separate protocol docking for each different speech recognition service or third-party application software, which greatly simplifies the development and integration process, not only improving the reusability of product functions, but also significantly reducing the development cost of enterprise intelligent cockpit products.

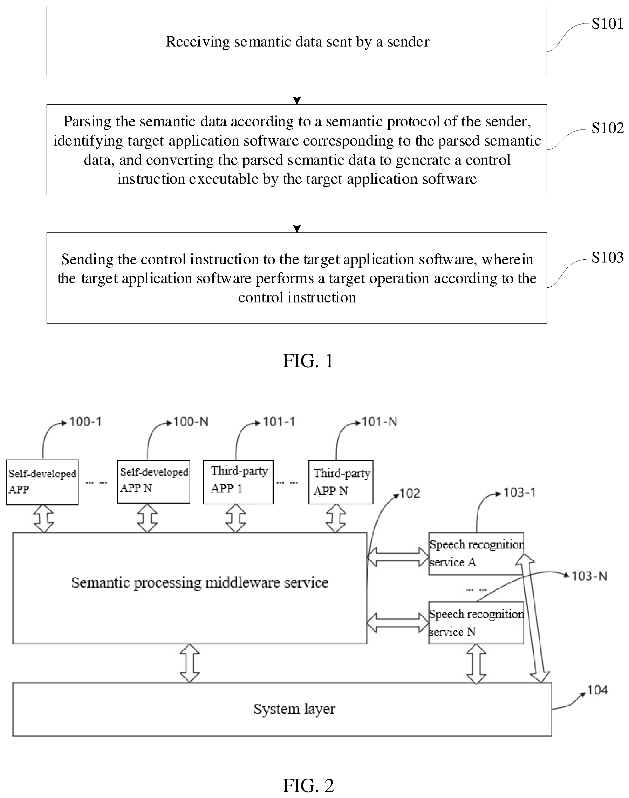

Specifically, FIG. 1 is a flowchart of a method for processing semantic data according to some embodiments of the present disclosure.

As shown in FIG. 1, the method for processing semantic data is applied to middleware that is a background service process. The method includes the following steps:
In step S101, semantic data sent by a sender is received.

Exemplarily, the method is executed by a vehicle-mounted computer (or referred to as a vehicle-mounted controller). The vehicle-mounted computer includes a first memory and a first processor. The first memory stores a processing program for semantic data; the processing program for semantic data is invoked and executed by the first processor to perform the method for processing semantic data provided by the present disclosure. The first memory may include, but is not limited to, the following types: random access memory (RAM), read-only memory (ROM), programmable read-only memory (PROM), erasable programmable read-only memory (EPROM), and electrically erasable programmable read-only memory (EEPROM). The first processor may be composed of one or more integrated circuit chips. Optionally, the first processor may be a general-purpose processor, such as a central processing unit (CPU) or a network processor (NP). Optionally, the first processor may perform the method for processing semantic data provided by the present disclosure by running a program or code.

Exemplarily, the vehicle-mounted computer is installed on the vehicle. A vehicle-mounted operating system runs on the vehicle-mounted computer, and the middleware runs in the vehicle-mounted operating system. Optionally, the middleware may be an operating system-level background service process. The middleware may also be a software module deployed in the vehicle-mounted infotainment system or intelligent cockpit domain controller.

The middleware may also be referred to as semantic processing middleware, which is a software layer located between an operating system and application programs, and is configured to handle conversion and unified scheduling of heterogeneous semantic data. Optionally, the middleware may parse various voice protocols from various speech recognition services; the middleware may further convert the parsed semantics into unified instructions executable by application programs; the middleware may also distribute instructions to target application programs (such as navigation, music players, or third-party software) according to business rules.

Exemplarily, the sender may be a speech recognition service. The middleware can receive the semantic data sent by the speech recognition service.

The speech recognition service is an integrated system of hardware and software that converts human language into structured semantic data. The speech recognition service is used to extract user intent from human audio and generate instructions or text (i.e., semantic data) that can be processed by machines. Understandably, the speech recognition service includes hardware devices that capture speech and software services that convert speech into semantics. The present disclosure integrates the speech recognition service into the intelligent vehicle cockpit system, and the speech recognition service generates semantic data using its respective semantic protocol.

For example, the speech recognition service can capture human voice audio inside the vehicle through a microphone, use speech-to-text technology to convert the human voice audio into text, and use semantic understanding technology to parse the text into structured instructions to obtain semantic data.

In step S102, the semantic data is parsed according to a semantic protocol of the sender, target application software corresponding to the parsed semantic data is identified, and the parsed semantic data is converted to generate a control instruction executable by the target application software.

Due to the diversification of semantic protocols of speech recognition services in current intelligent cockpits (semantic protocols of different suppliers vary greatly with significant differences in semantic data structures), the development cost of intelligent cockpits is high. Customized protocol docking with each supplier is required for every new function added, and later-stage maintenance is also relatively difficult. To address this problem, the method provided in this embodiment standardizes the structure of multi-source semantic data through middleware, thereby improving the development efficiency of the intelligent cockpit system.

The target application software is an application program that ultimately executes user voice instructions. Optionally, the target application software may run on the vehicle-mounted operating system of the vehicle-mounted computer or run on the vehicle-mounted infotainment system or intelligent cockpit system. The target application software serves as a foreground service process, interacting with the user through the foreground display interface. For example, the target application software may be vehicle-mounted navigation software, vehicle control software (such as air conditioning control software, seat adjustment software), vehicle-mounted music player, and so on.

In the embodiments of the present disclosure, different speech recognition services may use different semantic protocols to represent the same intention or command. Therefore, the embodiments of the present disclosure can parse various input heterogeneous semantic data and output unified instruction operations executable by application software. In actual implementation, the embodiments of the present disclosure determine the target application software that needs to process the instructions contained in the semantic data according to business rules.

In one embodiment of the present disclosure, converting the parsed semantic data to generate the control instructions executable by the target application software includes: acquiring a target communication protocol; and converting the parsed semantic data based on the target communication protocol to generate the control instruction executable by the target application software.

Exemplarily, the target communication protocol is an interface specification exposed externally by the target application software, which is used to receive control instructions issued by the middleware. The middleware needs to convert semantic data from different sources into control instructions that can be recognized by the target application software and conform to the target communication protocol, so as to transmit the semantic data to the target application software.

In the method provided by the embodiments, the compatibility between the control instructions and the target application software is ensured by acquiring the target communication protocol and converting semantic data based on the target communication protocol. The method can adapt to differences in communication protocols of different application software, avoiding invalid instructions caused by protocol mismatches. By dynamically adapting to the target communication protocol, the accuracy and reliability of instruction generation are improved, enabling semantic data to be smoothly converted into effective instructions executable by the target application software. In the method provided by the embodiments, the target application software is a foreground service process, which has higher priority and user interaction capabilities, ensuring timely response and execution of speech control instructions. By defining the operation mode of the target software, system resource scheduling is optimized, ensuring real-time performance of key operations, while avoiding latency issues caused by background process processing.

For ease of understanding, the embodiments of the present disclosure can be explained in detail with reference to FIG. 2. As shown in FIG. 2, 102 represents the middleware that executes the method for processing the semantic data of embodiments of the present disclosure and runs as an independent process in the operating system. The semantic processing middleware is a background service process without a foreground interface for user interaction. 100-1 to 100-N refer to self-developed application software of the company, which runs in the foreground as independent processes and can display foreground interfaces to interact with users. Semantic data communication between 101-1 to 101-N and the semantic middleware complies with a customized inter-process communication protocol. The customized communication protocol generally includes control information description, data structure or format, and event occurrence sequence description. 101-1 to 101-N refer to non-self-developed application software integrated into the intelligent vehicle cockpit system, referred to herein as third-party application software. The application software can display foreground interfaces to interact with users, such as commonly used social software, music players, and the like. Third-party application software may adopt information communication protocols specified by third-party companies. In this case, the semantic processing middleware needs to process the semantic data according to the information communication protocol provided by the third-party company. 103-1 to 103-N refer to speech recognition services integrated into the intelligent vehicle cockpit system. 104 refers to the operating system of the intelligent vehicle, and all processes and services in FIG. 1 run on top of the operating system. The semantic processing middleware service requires adaptation and development on different operating systems to achieve portability and reusability of the semantic middleware service across different systems.

The embodiments of the present disclosure can calculate the application software, i.e., 100-1 to 100-N or 101-1 to 101-N, that needs to process the instructions contained in the semantic data according to business rules.

For self-developed application software, the semantic processing middleware 102 re-encapsulates semantic data using a custom communication protocol and outputs the semantic data as executable instruction operations for unified application software, which are then sent to one or more application software instances 100-1 to 100-N. For third-party application software, the semantic processing middleware 102 re-encapsulates semantic data using the information communication protocol specified by the third-party company and outputs the semantic data as instruction operations executable by unified application software, which are then sent to one or more third-party application software 101-1 to 101-N.

In one embodiment of the present disclosure, before converting the parsed semantic data to generate the control instructions executable by the target application software, the method further includes: reading all application software of the vehicle; and in response to the target application software not existing in the all application software, intercepting the parsed semantic data and generating an interception prompt.

It can be understood that the embodiments of the present disclosure can read the list of all installed application software in the current intelligent vehicle operating system, and check whether the target application software corresponding to the parsed semantic data exists in the list. If it is found that the target application software does not exist in the operating system of the vehicle, that is, when the user attempts to invoke an uninstalled or unavailable application program through a voice command, the semantic processing middleware will intercept the semantic data and generate a corresponding interception prompt. In actual implementation, the prompt can be fed back to the user in the form of voice, informing the user that the specified application software is not found or cannot be used, thus avoiding potential errors or abnormalities caused by attempting to invoke non-existent application software. In the case where the target application software exists, the subsequent data conversion and instruction generation process will continue, and the control instruction will eventually be sent to the corresponding target application software.

In the method provided by the embodiments, invalid instructions are intercepted in advance by reading all the application software installed on the vehicle and checking whether the target application software exists before converting semantic data. In the case where the target application software does not exist, the semantic data is intercepted, and a prompt is generated, thus avoiding operation failures caused by invoking invalid application software. This method optimizes system resource allocation, prevents invalid instructions from occupying processing resources, improves user experience, and enables users to promptly learn the causes of operation failures.

In step S103, the control instruction is sent to the target application software, wherein the target application software performs a target operation according to the control instruction.

In one embodiment of the present disclosure, before sending the control instruction to the target application software, the method further includes: encapsulating the control instruction into target format data by using a communication protocol of the target application software.

In the embodiments of the present disclosure, for self-developed application software (100-1 to 100-N), the semantic processing middleware re-encapsulates control instructions based on a customized data protocol (such as the standard JSON format). For third-party application software (101-1 to 101-N), if encapsulation is required according to the data protocol of a third-party company, the control instructions are re-encapsulated based on its specific data structure and communication protocol. This ensures a smooth and efficient conversion from user voice input to final operation execution, enabling control instructions to be correctly transmitted and processed, thereby improving the response speed and user experience of the intelligent vehicle cockpit system.

In the method provided by the embodiments, the instructions are encapsulated into target format data by using the communication protocol of the target application software before sending control instructions, solving the data format compatibility issue of different software interfaces. Through encapsulation processing, it ensures that the control instructions can be correctly recognized and executed by the target application software. This method optimizes the instruction transmission process, avoids instruction failure caused by format errors, and improves the stability and reliability of the system.

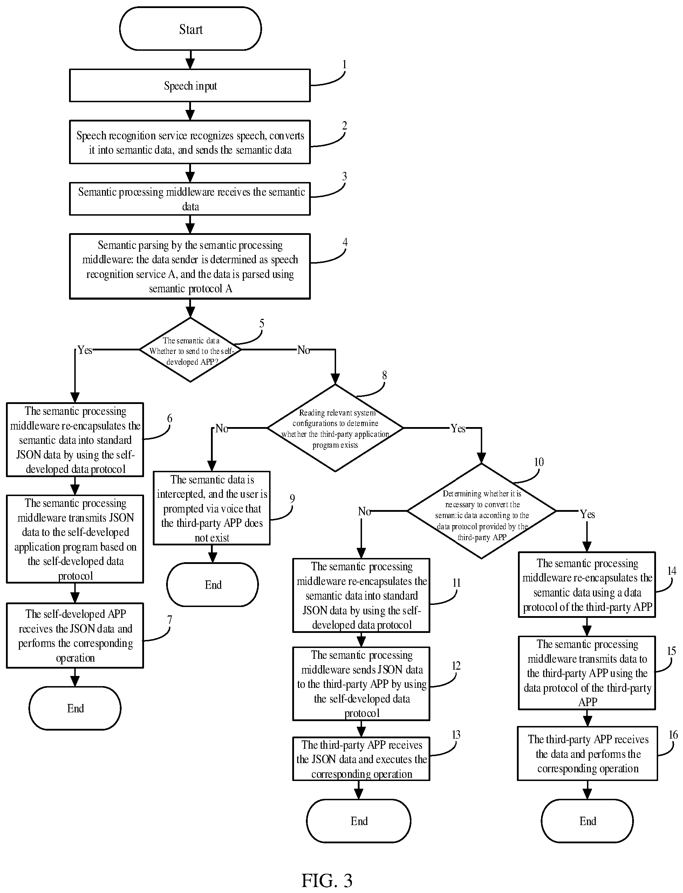

The following provides a detailed description of the method for processing semantic data in the embodiments of the present disclosure with reference to FIG. 3, which includes the following steps:
In step 1, human language audio data is captured from the physical world, i.e., speech input, using hardware devices such as microphones.
In step 2, the speech recognition service recognizes the captured speech data, generates semantic data based on the semantic protocol, and sends the semantic data to the semantic processing middleware.
In step 3, the semantic processing middleware can actively query the semantic recognition service to obtain semantic data or passively wait to receive semantic data.
In step 4, the semantic processing middleware parses the semantic data based on the semantic protocol of the sender of the semantic data.
In step 5, the semantic processing middleware determines whether the semantic data needs to be further sent to the self-developed application software.
In step 6, based on the determination result in step 5, if the result is positive, the semantic processing middleware re-encapsulates the control instruction into standard JSON format data based on a self-developed data protocol, and sends the standard JSON format data to the self-developed application software.
In step 7, the self-developed application software receives the JSON format data and performs the corresponding operation, thereby completing the data consumption.
In step 8, based on the determination result in step 5, if the result is negative, the semantic processing middleware needs to read the relevant system configurations, query the target third-party application software, and determine whether the semantic data is installed on the current operating system.
In step 9, based on the determination result in step 8, if the result is negative, the semantic processing middleware intercepts the semantic data and prompts the user via voice that the third-party application software does not exist in the operating system, thereby completing the data consumption.
In step 10, based on the determination result in step 8, if the result is positive, the semantic processing middleware determines whether it is necessary to re-package the control instruction according to the data protocol provided by the third-party application software.
In step 11, based on the determination result in step 10, if the result is negative, the semantic processing middleware re-encapsulates the control instruction into standard JSON format data based on the self-developed data protocol.
In step 12, the semantic processing middleware uses a self-developed data protocol communication method to send JSON-formatted data to third-party application software.
In step 13, the third-party application software receives the JSON format data and performs the corresponding operation, thereby completing the data consumption.
In step 14, based on the determination result in step 10, if the result is positive, the semantic processing middleware re-encapsulates the control instruction according to the data protocol of the third-party application software.
In step 15, the semantic processing middleware sends the encapsulated data to the third-party application software by using the communication method of the third-party application software data protocol.
In step 16, the third-party application software receives the protocol-encapsulated data and performs a corresponding operation, thereby completing the data consumption.

According to the method for processing semantic data provided by the embodiments of the present disclosure, the semantic data sent by the sender is received, and various heterogeneous semantic data is converted into unified control instructions executable by application software. There is no need to separately perform protocol docking for each different speech recognition service or third-party application software, which greatly simplifies the development and integration process. This not only improves the reusability of product functions, but also significantly reduces the development cost of enterprise intelligent cockpit products.

Next, an apparatus for processing semantic data according to embodiments of the present disclosure will be described with reference to the accompanying drawings.

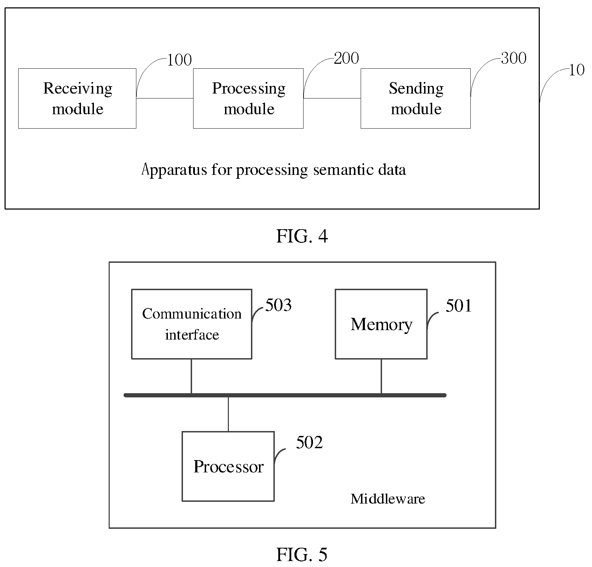

FIG. 4 is a block diagram of an apparatus for processing semantic data according to embodiments of the present disclosure.

As shown in FIG. 4, the apparatus for processing semantic data 10 includes a receiving module 100, a processing module 200, and a sending module 300.

The receiving module 100 is configured to receive semantic data delivered by a sender; the processing module 200 is configured to parse the semantic data according to a semantic protocol of the sender, identify target application software corresponding to the parsed semantic data, and convert the parsed semantic data to generate a control instruction executable by the target application software; and the sending module 300 is configured to send the control instructions to the target application software, wherein the target application software performs the target operation according to the control instruction.

In one embodiment of the present disclosure, the processing module is further configured to: acquire a target communication protocol; and convert the parsed semantic data based on the target communication protocol to generate the control instruction executable by the target application software.

In one embodiment of the present disclosure, the apparatus for processing semantic data further includes an encapsulating module, configured to encapsulate the control instruction into target format data by using a communication protocol of the target application software before sending the control instruction to the target application software.

In one embodiment of the present disclosure, the apparatus for processing semantic data 10 further includes: a reading module, configured to read all application software of a vehicle before converting the parsed semantic data to generate the control instruction executable by the target application software; and an intercepting module, configured to intercept, in response to the target application software not existing in the all application software, the parsed semantic data and generate an interception prompt.

In one embodiment of the present disclosure, the target application software is a foreground service process.

It should be noted that the foregoing descriptions of the embodiments of the method for processing semantic data are also applicable to the apparatus for processing semantic data in these embodiments, and will not be repeated herein.

According to the apparatus for processing semantic data provided by the embodiments of the present disclosure, semantic data sent by a sender is received, and various heterogeneous semantic data is converted into unified control instructions executable by application software. There is no need to separately perform protocol docking for each different speech recognition service or third-party application software, which greatly simplifies the development and integration process. This not only improves the reusability of product functions, but also significantly reduces the development cost of enterprise intelligent cockpit products.

FIG. 5 is a schematic structural diagram of a vehicle-mounted computer according to some embodiments of the present disclosure. The vehicle-mounted computer may include:
a memory 501, a processor 502, and a computer program stored on the memory 501 and executable on the processor 502.

When executing the program, the processor 502 performs the method for processing semantic data provided by the aforementioned embodiments.

Furthermore, the vehicle-mounted computer also includes:
a communication interface 503 used for communication between the memory 501 and the processor 502.

The memory 501 is used to store computer programs that can run on the processor 502.

The memory 501 may include high-speed random-access memory (RAM) and may also include non-transitory memory, such as at least one disk storage.

If the memory 501, the processor 502, and the communication interface 503 are implemented independently, the communication interface 503, the memory 501, and the processor 502 may be interconnected via a bus to complete mutual communication. The bus may be an industry standard architecture (ISA) bus, a peripheral component interconnect (PCI) bus, an extended industry standard architecture (EISA) bus, or the like. The bus can be divided into an address bus, a data bus, a control bus, and the like. For ease of illustration, only one thick line is used to represent the bus in FIG. 5, which does not indicate that there is only one bus or only one type of bus.

Optionally, in specific implementations, if the memory 501, the processor 502, and the communication interface 503 are integrated onto a single chip, the memory 501, the processor 502, and the communication interface 503 may communicate with each other via internal interfaces.

The processor 502 may be a central processing unit (CPU), an application-specific integrated circuit (ASIC), or one or more integrated circuits configured to implement embodiments of the present disclosure.

The embodiments of the present disclosure further provide a computer-readable storage medium storing a computer program thereon. When the computer program is executed by a processor, the computer program performs the aforementioned method for processing semantic data.

The embodiments of the present disclosure further provide a computer-readable storage medium storing a computer program or an instruction thereon. When the computer program or the instruction is executed, the computer program or the instruction is used to perform the aforementioned method for processing semantic data.

In the description of this specification, references to terms such as "an embodiment", "some embodiments", "an example", "a specific example", or "some examples" indicate that the specific features, structures, materials, or characteristics described in conjunction with the embodiment or example are included in at least one embodiment or example of the present disclosure. In this specification, the illustrative expressions of the aforementioned terms do not necessarily refer to the same embodiment or example. Furthermore, the specific features, structures, materials, or characteristics described may be combined in any suitable manner in any one or N embodiments or examples. In addition, without mutual contradiction, those skilled in the art may combine and integrate different embodiments or examples described in this description, as well as features thereof.

In addition, the terms "first" and "second" are used solely for descriptive purposes and should not be construed as indicating or implying relative importance or implicitly specifying the number of technical features being referred to. Consequently, features designated as "first" or "second" may explicitly or implicitly include at least one such feature. In the description of the present disclosure, the term "N" implies at least two, such as two, three, or the like, unless otherwise specifically and explicitly limited.

Any process or method description depicted in the flowchart or otherwise described herein may be understood to represent a module, segment, or portion of code that includes one or more executable instructions for performing a customized logical function or process. The scope of the preferred embodiments of the present disclosure includes additional implementations, wherein the functions may be performed in a substantially simultaneous manner or in reverse order according to the functions involved, rather than in the order shown or discussed, which should be understood by those skilled in the technical field to which the embodiments of the present disclosure belong.

It should be understood that various portions of the present disclosure may be implemented using hardware, software, firmware, or a combination thereof. In the aforementioned embodiments, the N steps or methods can be implemented using software or firmware stored in a memory and executed by a suitable instruction execution system. For example, if implemented using hardware, as in another embodiment, any one or a combination of the following technologies well-known in the art can be used: discrete logic circuits with logic gates for implementing logical functions on data signals, application-specific integrated circuits with suitable combinational logic gates, programmable gate arrays, field programmable gate arrays, or the like.

Those skilled in the technical field can understand that all or part of the steps carried out by the method of the above embodiment can be instructed to relevant hardware through a program. The program can be stored in a computer-readable storage medium, and when executed, includes one or a combination of the steps of the method embodiments.

Although the embodiments of the present disclosure have been shown and described above, it can be understood that the above embodiments are exemplary and should not be construed as limiting the present disclosure. Those skilled in the art may make variations, modifications, substitutions, and alterations to the above embodiments within the scope of the present disclosure.

## Claims

1. A method for processing semantic data, wherein the method is applied to middleware that is a background service process, and comprises:
receiving semantic data sent by a sender;
parsing the semantic data according to a semantic protocol of the sender, identifying target application software corresponding to the parsed semantic data, and converting the parsed semantic data to generate a control instruction executable by the target application software; and
sending the control instruction to the target application software, wherein the target application software performs a target operation according to the control instruction.

2. The method for processing semantic data according to claim 1, wherein said converting the parsed semantic data to generate the control instruction executable by the target application software comprises:
acquiring a target communication protocol; and
converting the parsed semantic data based on the target communication protocol to generate the control instruction executable by the target application software.

3. The method for processing semantic data according to claim 1 or 2, wherein before sending the control instruction to the target application software, the method further comprises:
encapsulating the control instruction into target format data by using a communication protocol of the target application software.

4. The method for processing semantic data according to any one of claims 1 to 3, wherein before converting the parsed semantic data to generate the control instruction executable by the target application software, the method further comprises:
reading all application software installed on a vehicle; and
intercepting, in response to the target application software not existing in the all application software, the parsed semantic data, and generating an interception prompt.

5. The method for processing semantic data according to any one of claims 1 to 4, wherein the target application software is a foreground service process.

6. An apparatus for processing semantic data, wherein the apparatus is applied to middleware that is a background service process, and comprises:
a receiving module, configured to receive semantic data sent by a sender;
a processing module, configured to parse the semantic data according to a semantic protocol of the sender, identify target application software corresponding to the parsed semantic data, and convert the parsed semantic data to generate a control instruction executable by the target application software; and
a sending module, configured to send the control instruction to the target application software, wherein the target application software performs a target operation according to the control instruction.

7. The apparatus for processing semantic data according to claim 6, wherein the processing module is further configured to:
acquire a target communication protocol; and
convert the parsed semantic data based on the target communication protocol to generate the control instruction executable by the target application software.

8. Middleware, comprising: a memory, a processor, and a computer program stored on the memory and executable on the processor, wherein the processor executes the program to perform the method for processing semantic data as defined in any one of claims 1 to 5.

9. A computer-readable storage medium storing a computer program or an instruction thereon, wherein the computer program or the instruction, when executed, performs the method for processing semantic data as defined in any one of claims 1 to 5.

10. A computer program product comprising: a computer program or an instruction, wherein the computer program or the instruction, when executed, performs the method for processing semantic data as defined in any one of claims 1 to 5.
